# EUROPEAN PATENT SPECIFICATION

(11) **EP 3 873 223 B1**
(45) Date of publication and mention of the grant of the patent: **26.02.2025**
(21) Application number: 19798245.7
(22) Date of filing: 31.10.2019
(51) Int. Cl.: A23D 7/005, A23J 3/22, A23L 29/20, A23L 29/231, A23L 29/244, A23L 33/115, A23L 33/16, A23L 33/185, A23L 35/00, A21D 13/16, A23J 3/14

(54) **NON-DAIRY FOOD COMPOSITION AND PROCESS FOR PREPARATION THEREOF**
MILCHFREIE NAHRUNGSZUSAMMENSETZUNG UND VERFAHREN ZU IHRER HERSTELLUNG
COMPOSITION ALIMENTAIRE NON LAITIÈRE ET PROCÉDÉ POUR SA PRÉPARATION

(30) Priority: 01.11.2018 US 201862754297 P
(43) Date of publication of application: 08.09.2021
(73) Proprietor: Société des Produits Nestlé S.A., 1800 Vevey (CH)
(72) Inventor: FERNANDEZ, FARRES, Isabel, 1012 Lausanne (CH); RAY, Joydeep, 1066 Epalinges (CH); SCHOBER, Tilman Johannes, Aurora, OH 44202 (US)
(74) Representative: Slaven, John William
(86) International application number: PCT/EP2019/079942
(87) International publication number: WO 2020/089444

(56) References cited:
- EP-A1- 1 431 313
- WO-A1-03/075675
- WO-A1-2008/049787
- WO-A1-2017/172718
- WO-A2-2014/007630
- GB-A- 2 149 639
- US-A1- 2015 056 346
- US-A1- 2015 351 427
- EISENBRAND G ET AL: "PEKTINE", ROEMPP LEXIKON LEBENSMITTELCHEMIE, XX, XX, 1 January 1995 (1995-01-01), pages 634 - 635, XP002201912

## Description

### Background of the Invention

There has been an increasing trend in the supply of dairy-free products. The single largest factor driving consumers to choose dairy-free is a shift in perception of millennials who believe dairy-free is better for them. Their perceptions of health and sustainability (including animal welfare and environmental footprint) are core motivators for their choice to limit dairy consumption. Currently, meat-analogues that are dairy-free has become extremely popular to not only vegans and vegetarians, but to "flexitarians" who occasionally eat plant-based diets, due the sustainability issues and negative health connotation surrounding meat products, especially processed meats. Many existing processes produce texturized meat-analogues, which does not mimic the nutrition, texture, appearance, taste and/or mouthfeel of real meat products. Hence, such food products are mostly unappealing and unpalatable to the consumers. In meat and/or processed meat such as minced-meat, hamburgers and ground sausages the fat after cooking not only provides mouthfeel via melting and juiciness but also contributes to textural attributes. Fat in meat is elastic in texture, somewhat slippery and chewy when cooked at higher temperature. Today, vegetable fats and oils are used in preparation of meat analogues to provide juiciness at serving temperatures; however, such preparations fail to replicate the appearance and unique texture of adipose tissue.

WO 2016/150834 relates to a process for preparing a meat-analogue food product having the appearance and the texture of meat and also relates to a meat-analogue food product obtained by the process. WO 2003/007729 describes an extrusion process for preparing a retextured food product from a protein source (animal and /or plant origin). The fat content of the product was achieved by mixing fatty ingredients with lecithins or caseinates together with the protein, fibers and starches and with a large amount of water before kneading the mixture to obtain a paste food that is subjected successively a heating, gelation and formatting steps. Nevertheless, meat has a carbohydrate amount of 0 to 0.5 wt. % and therefore meat-analogue compositions with high amounts of carbohydrates such as starches are not perceived as having a nutritional value of meat. Additional higher amounts of carbohydrates such as starches have a negative perceived mouth feeling by the consumers. Furthermore, they are perceived to have a cereal taste and aroma, which is not pleasant. WO 2012/158023 describes an extrusion process for turning vegetable protein compositions such as soy protein into a fibrous, meat-like structure. The process describes that the extrusion exit temperature is above the boiling point of water and this results in an open structure that can be infused with an infusion liquid to reach a desirable fat content. This infusion technology nevertheless means an additional process step and the product might perceived as too fatty by the consumers.
US2015/056346 relates to a process for preparing a meat-analogue food product having the appearance and the texture of meat.

There is a persisting need for a process of preparing a meat-analogue food product having the appearance, texture and taste of meat. Further, there is a need to produce a meat-analogue food product having the appearance, texture and taste of meat with a desired amount of oil, fat or a combination thereof in the resulting composition.

The object of the present invention is to improve the state of the art and to provide better solutions to produce non-dairy food composition free from cholesterol and low in saturated fat for food compositions, in particular animal fat substitutes for meat-analogues, which taste good and are made from natural ingredients. It would furthermore be advantageous to find solutions that do not require the use of additives such as gelling agents, thickeners, emulsifiers and whitening agents.

### Summary of invention

Disclosed is a non-dairy food composition comprising particles of an emulsion gel dispersed in a crystallized lipid; wherein the emulsion gel comprises a combination of dietary fiber; plant protein, lipid and calcium; and wherein the wherein the composition is devoid of additives. In one embodiment the crystallized lipid comprises saturated fatty acids comprising 12-24 carbons present in amount of at least 35 wt. % (of the total fat content). The crystallized lipid is present in a continuous phase in the amount ranging from 30 to 95 wt. % and the emulsion gel is present in a dispersed phase in an amount ranging from 5 to 70 wt. %.

Disclosed is a use of the composition as described above to prepare meat-analogues or aerated food compositions or laminated dough.

In one aspect, the present invention relates to a method of preparing a non-dairy composition comprising the steps of:
(a) Preparing an emulsion gel particle comprising the steps of:
   (i) Dry mixing dietary fiber, calcium and plant protein at room temperature;
   (ii) Adding water under shear until homogenous mixture is reached;
   (iii) Adding lipids to the above mixture and emulsifying under high shear;
   (iv) Adjusting the pH between 4-6 of the emulsion obtained in step (iii) followed by heating the emulsion to a temperature ranging from 80-90°C;
   (v) Solidifying the emulsion obtained from step (iv) by cooling down to temperature ranging from 10-25°C resulting in solid emulsified gel;
   (vi) Breaking down the solid emulsified gel to smaller particles; and
(b) Dispersing of the broken emulsion gel obtained from step (a) comprising the steps of:
   (vii) Adding a melted lipid to broken emulsion gel particles to form a continuous phase;
   (viii) Mixing the above mixture until the lipid that is added in step (vii) is partially crystallized such that the mixture can molded into a shape or optionally aerated;
   (ix) Storing the dispersed emulsion gel particles in chilled condition between 4-6°C for further hardening, as claimed.

### Brief description of figures

Figure 1a represents schematic representation of emulsion gel particles dispersed with crystallized fat.
Figure 1b shows flakes of emulsion gel matrix dispersed in crystallized fat (Recipe C).
Figure 2a shows raw vegan hamburger where the flakes of Recipe C (as shown in figure 1b) incorporated as meat fat replacer.
Figure 2b shows cooked vegan hamburger of Recipe C.

### Detailed description of the invention

The compositions disclosed herein may lack any element that is not specifically disclosed herein. Thus, a disclosure of an embodiment using the term "comprising" includes a disclosure of embodiments "consisting essentially of" and "consisting of" and "containing" the components identified. Similarly, the methods disclosed herein may lack any step that is not specifically disclosed herein. Thus, a disclosure of an embodiment using the term "comprising" includes a disclosure of embodiments "consisting essentially of" and "consisting of" and "containing" the steps identified. Any embodiment disclosed herein can be combined with any other embodiment disclosed herein unless explicitly and directly stated otherwise.

Unless defined otherwise, all technical and scientific terms and any acronyms used herein have the same meanings as commonly understood by one of ordinary skill in the art in the field of the invention. Although any compositions, methods, articles of manufacture, or other means or materials similar or equivalent to those described herein can be used in the practice of the present invention, the preferred compositions, methods, articles of manufacture, or other means or materials are described herein.

The term "wt. %" used in the entire description below refers to total weight % of the final product. The final composition included water unless specified. The recipes in the examples show an illustration of how wt. % is to be understood by the skilled person in the art.

The terms "food", "food product" and "food composition" mean a product or composition that is intended for ingestion by an animal, including a human, and provides at least one nutrient to the animal or human. The present disclosure is not limited to a specific animal.

A "meat-analogue" is also called a meat alternative, meat substitute, mock meat, faux meat, imitation meat, or (where applicable) vegetarian meat or vegan meat. Meat analogue is understood to mean a food made from non-meats, without other animal products, such as dairy. Therefore, protein from animal source is completely absent. Protein from animal source is animal meat protein and/or milk protein. A meat-analogue food product is a composition in which meat (i.e. skeletal tissue and non- skeletal muscle from mammals, fish and fowl) and meat by-products (i.e. the non-rendered clean parts, other than meat, derived from slaughtered mammals, fowl or fish) are completely absent. The market for meat imitations includes vegetarians, vegans, non-vegetarians seeking to reduce their meat consumption for health or ethical reasons, and people following religious dietary laws.

The term "devoid of additives" refers to compositions not containing modified starches, hydrocolloids (e.g. carraregenans, xanthan gum, gellan gum, locust bean gum, alginates, guar gum, karaya gum, gum Arabic, konjac gum, agar agar, gelatin); emulsifiers (e.g. lecithin, mono and diglycerides, Polyglycerol polyricinoleate (PGPR)); whitening agents (e.g. titanium dioxide); plasticizers (e.g. glycerine); anti-caking agents (e.g. silicon-dioxide).

The term "dietary fiber" relates to a plant-based ingredient that is not completely digestible by enzymes in the human gut system. The term may comprise plant based fiber-rich fraction obtained from vegetables, seeds, fruits, nuts, pulses. The dietary fiber may comprise cellulose, hemicellulose, pectin, β-glucans, gums, mucilages and lignin. In one embodiment the dietary fiber is a fiber fraction from potato with a soluble polysaccharide fraction greater than 50% and comprising pectins as main polysaccharide component of the soluble fraction and may contain residual starch and protein. In one embodiment the plant-source is a potato flesh and skin fragments. In one embodiment of the present invention, the dietary fiber comprises a soluble polysaccharide fraction greater than 50 wt. %, wherein soluble polysaccharide fraction comprises at least 50 wt. % pectin.

A water based solution comprising 5 wt. % dietary fiber at 20°C exhibits the following viscoelastic properties:
- shear thinning behavior with zero shear rate viscosity above 8 Pa.s and
- G' (storage modulus) greater than 65 Pa and G" (loss modulus) lower than 25Pa of at 1Hz frequency.

In one embodiment, the dietary fiber at 5 wt. % in aqueous solution at 20°C exhibits the following viscoelastic properties 1) shear thinning behavior with zero shear rate viscosity above 8 Pa.s and 2) G' (storage modulus) greater than 65 Pa and G" (loss modulus) lower than 25Pa of at 1Hz frequency.

In one embodiment of the present invention the amount of dietary fiber used in preparing non-dairy composition ranges from 0.5 to 30 wt. %. In one embodiment the dietary fiber is potato fiber present in an amount ranging from 0.5 to 15 wt. %.

The term "plant protein" includes "plant protein isolates" or "plant protein concentrates" or combination thereof and refers to any protein source from vegetables, seeds, nuts, algae, pulses.

The term "plant protein concentrate" as used herein is a plant material having a protein content of from about 65 wt. % to less than about 90 wt. % plant protein. Plant protein concentrate also contains plant fiber, typically from about 3.5 wt. % up to about 20 wt. %.

The term plant protein isolate as used herein is a plant material having a protein content of at least about 80 wt. % plant protein on a moisture free basis.

Plant protein include plant protein concentrate or plant protein isolate from pea protein, corn protein (e.g., ground corn or corn gluten), wheat protein (e.g., ground wheat or wheat gluten such as vital wheat gluten), potato protein, legume protein such as soy protein (e.g., soybean meal, soy concentrate, or soy isolate), rice protein (e.g., ground rice or rice gluten), barley protein, algae protein, canola protein or combinations thereof. Preferably the plant protein is wheatgluten, more preferably the plant protein is a mix from soy protein and wheat gluten, more preferably the plant protein is soy protein.

In one embodiment the plant protein is a pea protein isolate with protein fraction of at least 50 wt. %. In one embodiment the plant protein is a pea protein isolate with protein fraction of at least 80 wt. %.

In one embodiment of the present invention the amount of pea protein isolate used in preparing non-dairy composition ranges from 2 to 15 wt. %.

The term "lipid" refers to oil, fat and combinations of oil and fat in particular triglycerides. The term "lipid" also comprises oils obtained from vegetables, seeds, nuts and algae. In a preferred embodiment the oil is selected from the group consisting of sunflower oil, rapeseed oil, canola oil, cotton seed oil, peanut oil, soy oil, olive oil, moringa oil, algal oil, safflower oil, corn oil, rice bran oil, sesame oil, hazelnut oil, avocado oil, almond oil, walnut oil or a combination thereof including the high oleic versions of the oils stated above. In one embodiment the lipid is a high oleic vegetable oil comprising monounsaturated fatty acid of at least 65 wt. % and polyunsaturated fatty acid below 10 wt. % and displays below 5 wt. % of solid fat content at 0°C, wherein, the unsaturated fatty acid contains 18C-atoms or more than 18C-atoms. The term lipid may also refer to solid fats with saturated fatty acid content greater than 20 wt. %, for example stearin fractions and mid-fractions of palm (both fruit and Kernel), shea, cocoa, coconut, cottonseed, moringa and algae. In one embodiment the solid fat may be stearin fraction of Shea butter.

The term "crystallized lipid" refers to oil or fat or combinations thereof such that the solid fat content at 20°C is above 20 wt. %. In one embodiment of the present invention the crystallized lipid is shea stearin present in the amount of at least 50 wt. % in a continuous phase.

In one embodiment of the present invention the amount of lipid used in preparing the emulsion gel for the non-dairy composition ranges from 5 to 30 wt. %.

The term "calcium" refers to salts of calcium such as calcium carbonate, calcium chloride, calcium gluconate, calcium lactate, calcium phosphate, calcium glycerophosphate and the like, and mixtures thereof. In one embodiment the calcium is a calcium phosphate salt. The amount of calcium ranges from 0.5 to 5 wt. % used for preparing the emulsion gel.

The term "citrus fruit juice concentrate" comprises lemon juice, grape fruit, orange, berries, lime and combinations thereof. The term also includes clarified form. In an embodiment the "citrus fruit juice concentrate" is concentrated juice from citrus fruits selected from the group consisting of lemon, grape fruit, orange, lime and combinations of these. In one embodiment the citrus fruit juice concentrate is lime juice ranging from 0 to 5 wt. % used for preparing the emulsion gel.

In one embodiment of the present invention the emulsion gel comprises 0.5 to 30 wt. % dietary fiber, 2 to 15 wt. % plant protein and 5 to 30 wt. % lipid; wherein the emulsion gel is devoid of additives comprising modified starches, hydrocolloids, emulsifiers, whitening agents, plasticizers and anti-caking agents. In another embodiment the composition as described here comprises dietary fiber having at least 50 wt. % of soluble polysaccharide fraction of the total dietary fiber. In another embodiment this soluble fraction is pectin.

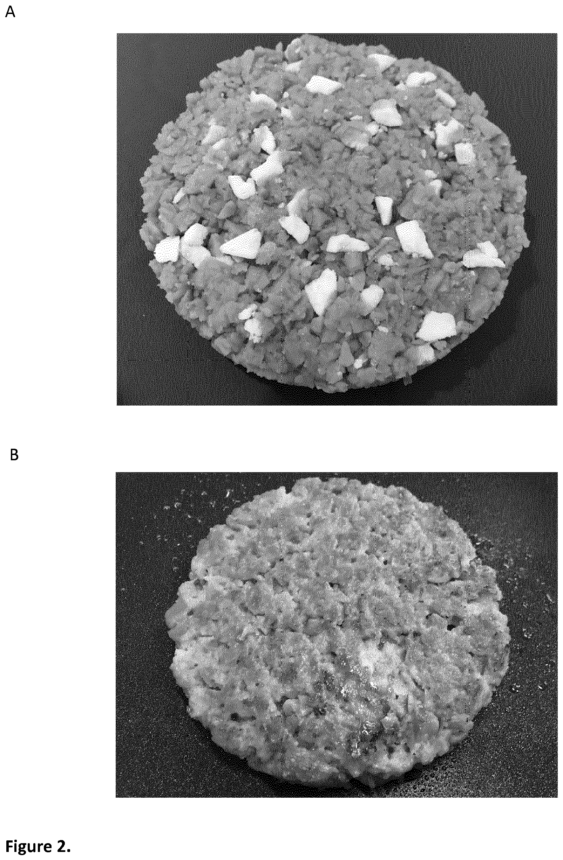

In one embodiment the non-dairy composition is used to prepare meat-analogues. For example figure 2A shows the incorporation of such non-dairy composition in a burger pattie. In one embodiment the non-dairy composition is used to prepare aerated food compositions by a process comprising the steps of preparing an emulsion gel particle comprising the steps of: Mixing dietary fiber and plant protein at room temperature; Adding water under shear until homogenous mixture is reached; Adding lipids to the above mixture and emulsifying under high shear; Adjusting the pH between 4-6 of the emulsion obtained above step followed by heating the emulsion to a temperature ranging from 80-90°C; Solidifying the emulsion obtained from above step by cooling down to temperature ranging from 10-25°C resulting in solid emulsified gel; Breaking down the solid emulsified gel to smaller pieces; and Dispersing of the broken emulsion gel obtained from step (a) comprising the steps of Adding a melted lipid to form a continuous phase; Mixing the above mixture until the lipid that is added in step (vii) is partially crystallized such that the mixture can be aerated to obtain an aerated product. In one embodiment, aeration is achieved by whipping wherein the crystallized lipid stabilizes the air bubbles.

In another embodiment the non-dairy composition is used to prepare a laminated dough by incorporating the non-dairy composition in form of layers between a dough followed by baking of the laminated dough.

### Examples:

### Example 1a: Preparing an emulsion gel particle

A lab scale double-jacketed Stephan mixer equipped with a cutting blade was used to produce the following emulsion gels (Recipe A and Recipe B) as outlined in Table 1. At first, weighting and dry mixing of the powder ingredients were carried out. Next, water was added slowly to the powder mixtures and mixed under high shear (sample T=20°C/t=5-10 min) in Stephan mixer. Then high oleic sunflower oil (HOSO) was added under low shear (sample T=20°C/t=10-15 min) to obtain an emulsion gel structure where the dispersed HOSO droplets were stabilized within the fiber-protein network. The samples were then heated (sample T=85°C) while mixing under high shear until reaching a smooth texture. Finally, the emulsions were cooled down between 10-25°C resulting in formation of an emulsion gel matrix.

**Table 1.**

| **Ingredients** | **Recipe A (wt %)** | **Recipe B (wt %)** |
|---|---|---|
| High oleic sunflower oil | 18 | 15 |
| Potato fiber | 13 | 9 |
| Pea protein isolate | 4 | 3 |
| Calcium phosphate | 3 | 2 |
| Salt | 1 | 1 |
| Water | 61 | 70 |
| Sum | 100 | 100 |

### Example 1b: Dispersing emulsion gel particles in lipids

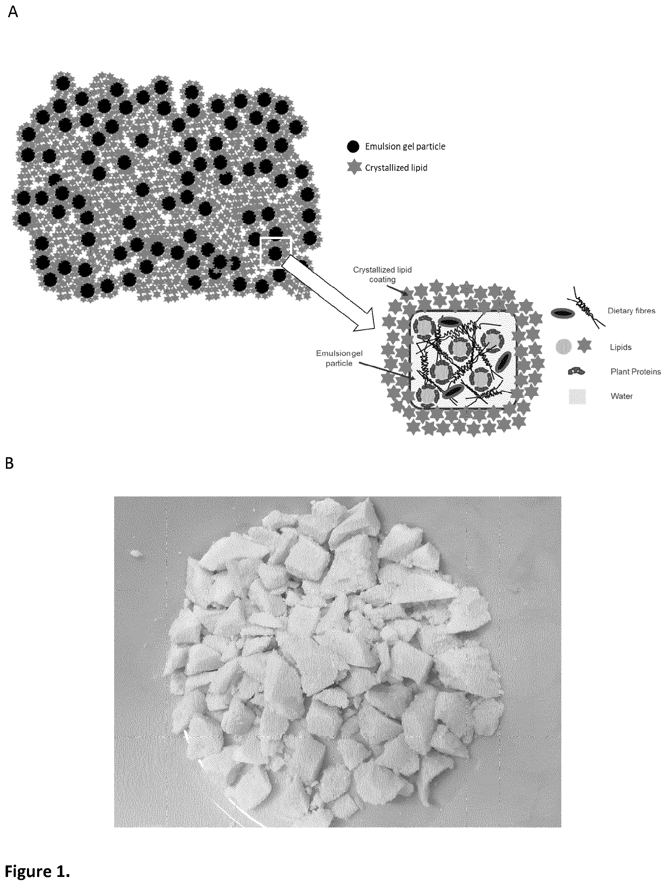

Table 2 outlines the composition of emulsion gel particles dispersed with different levels of fat (Recipe C and Recipe D). At first, the emulsion gel as described in example 1a was broken in the Stephan mixer using a cutting blade to obtain smaller pieces. Then additional melted fat, shea stearin was added to uniformly disperse the gel particles under high shear mixing until the fat dispersion was partially crystallized. Finally, the dispersed gel particles were moulded to desired shape and stored at chilled conditions (between 4-6°C, preferably overnight) for further hardening. Figure 1a represents schematic representation of emulsion gel matrix dispersed with crystallized fat. Once hardened, the samples were cut into smaller flakes for further application (Figure 1B).

**Table 2.**

| **Ingredients** | **Recipe C (wt %)** | **Recipe D (wt %)** |
|---|---|---|
| Illexao HS90 | 51 | 30 |
| Recipe A | 49 | - |
| Recipe B | - | 70 |
| Sum | 100 | 100 |
| Total fat | 60 | 41 |
| SFA | 32.5 | 19.5 |

### Example 2: Preparation of vegan burgers

Table 3 outlines a vegan burger recipe containing coconut fat flakes (Recipe E) and fat dispersed emulsion gel flakes (Recipe F). Vegan burger containing coconut fat flakes was used as a comparative example. The fat dispersed emulsion gel flakes were prepared as described in the previous example (Recipe C). Vegan burger Recipe F of the present invention contained approximately 62% less SFA than Recipe E.

To prepare the burger patties, at first the textured soy protein pieces were hydrated with water and then the dried ingredients (i.e. methylcellulose, salt, flavoring, colour powder) were added and mixed homogeneously. Next, the coconut fat flakes and fat dispersed emulsion gel flakes were added to the rest of the ingredients and moulded in form of patties. In case of Recipe E, the temperature of the burger mixture was kept around 15°C so that the coconut fat flakes were not melted during the preparation process. The patties were refrigerated overnight before cooking for 12 min (including both sides) on a hot pan. Figure 2a and 2b shows the raw and cooked vegan burger recipe F containing fat dispersed emulsion gel flakes respectively. Both the cooked burger patties from Recipe E and F were comparable in visual appearance, however burger pattie from recipe F has reduced fat and SFA content.

**Table 3.**

| **Ingredients** | **Recipe E (wt %)** | **Recipe F (wt %)** |
|---|---|---|
| Water | 62.3 | 62.3 |
| Textured soy protein | 23.3 | 23.3 |
| Natural colour powder | 0.3 | 0.3 |
| Flavour powder | 0.4 | 0.4 |
| Salt | 0.8 | 0.8 |
| Methylcellulose | 1.9 | 1.9 |
| Maltodextrin | 2.0 | 2.0 |
| Canola oil | 3.0 | 3.0 |
| Coconut fat flakes | 6.0 | - |
| Fat dispersed emulsion gel flakes (Recipe C) | - | 6.0 |
| Sum | 100 | 100 |
| Saturated fatty acid (SFA) | ~5.8* | ~2.2 |

| | | |
|---|---|---|
| *The SFA content of coconut fat flakes used in this example was 94g/100g of fat | | |

## Claims

1. A method of preparing a non-dairy composition comprising the steps of:
(a) Preparing an emulsion gel particle comprising the steps of:
(i) Dry mixing 0.5 to 15 wt% potato fiber, calcium salt and pea protein isolate, preferably at room temperature;
(ii) Adding water under shear until a homogenous mixture is reached;
(iii) Adding high oleic sunflower oil to the above mixture and emulsifying, preferably under high shear;
(iv) Adjusting the pH between 4-6 of the emulsion obtained in step (iii) followed by heating the emulsion to a temperature ranging from 80-90°C;
(v) Solidifying the emulsion obtained from step (iv) by cooling down to a temperature ranging from 10-25°C resulting in a solid emulsified gel;
(vi) Breaking down the solid emulsified gel to smaller particles; and
(b) Dispersing of the broken emulsion gel obtained from step (a) comprising the steps of:
(vii) Adding a melted shea stearin to the broken emulsion gel particles to form a continuous phase;
(viii) Mixing the above mixture until the shea stearin that is added in step (vii) is partially crystallized such that the mixture can be molded into a shape or optionally aerated;
(ix) Storing the dispersed emulsion gel particles in chilled condition between 4-6°C for further hardening,
wherein in the emulsion gel particles
the pea protein isolate is present at a concentration ranging from 2 to 15 wt%,
the calcium salt ranges from 0.5 to 5 wt% and
the high oleic sunflower oil ranges from 5 to 30 wt%.

2. A method of preparing a non-dairy composition according to claim 1, wherein the potato fiber at 5 wt. % in aqueous solution at 20°C exhibits the following viscoelastic properties 1) shear thinning behavior with zero shear rate viscosity above 8 Pa.s and 2) G' (storage modulus) greater than 65 Pa and G" (loss modulus) lower than 25Pa of at 1Hz frequency.

3. The method of preparing a non-dairy composition according to claim 2, wherein the potato fiber comprises a soluble polysaccharide fraction greater than 50 wt. % of the total potato fiber.

4. The method of preparing a non-dairy composition according to any one of claims 1 to 3, wherein the calcium salt is selected from calcium carbonate, calcium chloride, calcium gluconate, calcium lactate, calcium phosphate, calcium glycerophosphate, and mixtures thereof.

## Patentansprüche

1. Verfahren zum Herstellen einer milchfreien Zusammensetzung, umfassend die Schritte:
(a) Herstellen eines Emulsionsgelpartikels, umfassend die Schritte:
(i) Trockenmischen von 0,5 bis 15 Gew.-% Kartoffelfaser, Calciumsalz und Erbsenproteinisolat, vorzugsweise bei Raumtemperatur;
(ii) Zugeben von Wasser unter Scherung, bis eine homogene Mischung erreicht ist;
(iii) Zugeben von Sonnenblumenöl mit hohem Ölsäuregehalt zu der obigen Mischung und Emulgieren, vorzugsweise unter hoher Scherung;
(iv) Einstellen des pH-Werts der in Schritt (iii) erhaltenen Emulsion auf einen Wert zwischen 4-6 und anschließendes Erhitzen der Emulsion auf eine Temperatur in einem Bereich von 80-90 °C;
(v) Verfestigen der in Schritt (iv) erhaltenen Emulsion durch Abkühlen auf eine Temperatur in dem Bereich von 10-25 °C, wodurch ein festes, emulgiertes Gel entsteht;
(vi) Zerlegen des festen, emulgierten Gels in kleinere Partikel; und
(b) Dispergieren des in Schritt (a) erhaltenen zerlegten Emulsionsgels, umfassend die Schritte:
(vii) Zugeben eines geschmolzenen Shea-Stearins zu den zerlegten Emulsionsgelpartikeln, um eine kontinuierliche Phase auszubilden;
(viii) Mischen der obigen Mischung, bis das in Schritt (vii) zugegebene Shea-Stearin derart teilweise kristallisiert ist, dass die Mischung in eine Form gebracht oder optional belüftet werden kann;
(ix) Lagern der dispergierten Emulsionsgelpartikel in gekühltem Zustand zwischen 4-6 °C für eine weitere Aushärtung,
wobei in den Emulsionsgelpartikeln
das Erbsenproteinisolat in einer Konzentration in dem Bereich von 2 bis 15 Gew.-% vorhanden ist,
das Calciumsalz in dem Bereich von 0,5 bis 5 Gew.-% liegt und
das Sonnenblumenöl mit hohem Ölsäuregehalt in dem Bereich von 5 bis 30 Gew.-% liegt.

2. Verfahren zum Herstellen einer milchfreien Zusammensetzung nach Anspruch 1, wobei die Kartoffelfaser bei 5 Gew.-% in wässriger Lösung bei 20 °C die folgenden viskoelastischen Eigenschaften aufweist: 1) scherverdünnendes Verhalten mit Null-Scherraten-Viskosität über 8 Pa.s und 2) G' (Speichermodul) größer als 65 Pa und G" (Verlustmodul) kleiner als 25 Pa bei 1 Hz Frequenz.

3. Verfahren zum Herstellen einer milchfreien Zusammensetzung nach Anspruch 2, wobei die Kartoffelfaser einen löslichen Polysaccharidanteil von mehr als 50 Gew.-% der gesamten Kartoffelfaser umfasst.

4. Verfahren zum Herstellen einer milchfreien Zusammensetzung nach einem der Ansprüche 1 bis 3, wobei das Calciumsalz aus Calciumcarbonat, Calciumchlorid, Calciumgluconat, Calciumlactat, Calciumphosphat, Calciumglycerophosphat und Mischungen davon ausgewählt ist.

## Revendications

1. Procédé de préparation d'une composition non laitière, comprenant les étapes consistant à :
(a) préparer une particule de gel d'émulsion comprenant les étapes consistant à :
(i) mélanger à sec de 0,5 à 15 % en poids de fibres de pomme de terre, de sel de calcium et d'isolat de protéines de pois, de préférence à température ambiante ;
(ii) ajouter de l'eau sous cisaillement jusqu'à obtention d'un mélange homogène ;
(iii) ajouter de l'huile de tournesol à haute teneur en acide oléique au mélange susmentionné et émulsionner, de préférence, sous cisaillement élevé ;
(iv) ajuster le pH entre 4 et 6 de l'émulsion obtenue à l'étape (iii), puis chauffer l'émulsion à une température comprise entre 80 et 90 °C ;
(v) solidifier l'émulsion obtenue à l'étape (iv) en la refroidissant à une température comprise entre 10 et 25 °C pour obtenir un gel émulsifié solide ;
(vi) décomposer le gel solide émulsifié en particules plus petites ; et
(b) disperser le gel d'émulsion brisé obtenu à l'étape (a) comprenant les étapes consistant à :
(vii) ajouter une stéarine de karité fondue aux particules de gel d'émulsion brisées pour former une phase continue ;
(viii) mélanger le mélange susmentionné jusqu'à ce que la stéarine de karité ajoutée à l'étape (vii) soit partiellement cristallisée de sorte que le mélange puisse être moulé dans une forme ou éventuellement aéré ;
(ix) stocker les particules de gel d'émulsion dispersées à une température comprise entre 4 et 6 °C pour qu'elles durcissent davantage,
dans lequel, dans les particules de gel d'émulsion,
l'isolat de protéines de pois est présent à une concentration comprise entre 2 et 15 % en poids,
le sel de calcium varie de 0,5 à 5 % en poids et
l'huile de tournesol à haute teneur en acide oléique varie de 5 à 30 % en poids.

2. Procédé de préparation d'une composition non laitière selon la revendication 1, dans lequel la fibre de pomme de terre à 5 % en poids dans une solution aqueuse à 20 °C présente les propriétés viscoélastiques suivantes 1) comportement de fluidification par cisaillement avec une viscosité à taux de cisaillement nul supérieure à 8 Pa.s et 2) G' (module de stockage) supérieur à 65 Pa et G" (module de perte) inférieur à 25 Pa à une fréquence de 1 Hz.

3. Procédé de préparation d'une composition non laitière selon la revendication 2, dans lequel la fibre de pomme de terre comprend une fraction de polysaccharide soluble supérieure à 50 % en poids de la fibre de pomme de terre totale.

4. Procédé de préparation d'une composition non laitière selon l'une quelconque des revendications 1 à 3, dans lequel le sel de calcium est choisi parmi le carbonate de calcium, le chlorure de calcium, le gluconate de calcium, le lactate de calcium, le phosphate de calcium, le glycérophosphate de calcium et des mélanges de ceux-ci.
